# FASCICULE DE BREVET EUROPEEN

(11) **EP 1 054 187 B1**
(45) Date de publication et mention de la délivrance du brevet: **17.12.2003**
(21) Numéro de dépôt: 00401304.1
(22) Date de dépôt: 12.05.2000
(51) Int. Cl.: F16F 15/08, F16F 13/26, H01F 7/16

(54) **Actionneur electromagnétique**
Elektromagnetischer Betätiger
Electromagnetic actuator

(30) Priorité: 17.05.1999 FR 9906218
(43) Date de publication de la demande: 22.11.2000
(73) Titulaire: HUTCHINSON, 75008 Paris (FR)
(72) Inventeur: Gennesseaux, André, 28200 Conie-Molitard (FR); Gastineau, Jean-Luc, 41160 St-Jean Froidmentel (FR); Durand, Sylvain, 45190 Villorceau (FR); Menager, Joel, 28220 St-Hilaire sur Yerre (FR)
(74) Mandataire: Burbaud, Eric

(56) Documents cités:
- EP-A- 0 893 620
- US-A- 5 388 812

## Description

La présente invention est relative aux actionneurs électromagnétiques.

Plus particulièrement, l'invention concerne un actionneur électromagnétique comportant :
- un élément magnétique mobile qui est déplaçable en translation en suivant des mouvements alternatifs selon un axe central, cet élément magnétique mobile comprenant des plaques ferromagnétiques rigides empilées, et ledit élément magnétique mobile étant relié à une armature fixe par des corps en élastomère qui autorisent les mouvements alternatifs de l'élément magnétique mobile parallèlement à l'axe central,
- et au moins un électroaimant qui est solidaire de ladite armature et qui est disposé pour commander les déplacements alternatifs de l'élément magnétique mobile selon l'axe central lorsque ledit électroaimant est parcouru par un courant variable au cours du temps.

Le document EP-A-0 544 576 décrit un exemple d'un tel actionneur électromagnétique, qui donne entière satisfaction au plan de son fonctionnement.

Toutefois, la réalisation pratique de l'élément magnétique mobile pose les problèmes suivants :
- l'assemblage des plaques ferromagnétiques de l'élément magnétique mobile doit présenter une grande raideur, d'autant plus que l'élément magnétique mobile a généralement une forme élancée avec une épaisseur relativement faible dans le sens de l'axe central,
- l'assemblage des plaques ferromagnétiques doit présenter une grande résistance à la fatigue, d'autant plus que l'élément magnétique mobile est soumis au cours de sa durée de vie et à un très grand nombre de cycles d'efforts alternés (généralement plusieurs milliards) dus à ses déplacements alternés,
- cet assemblage doit être très précis et garantir une parfaite planéité de l'élément magnétique mobile, dans la mesure où l'entrefer qui sépare cet élément magnétique de l'électroaimant est généralement très faible, par exemple de l'ordre de 1 mm,
- et cet assemblage ne doit pas permettre l'apparition de courants de Foucault.

Ces problèmes techniques n'ont jusqu'à présent trouvé aucune solution satisfaisante, ni par collage des plaques (résistance à la fatigue insuffisante), ni par soudage (résistance à la fatigue insuffisante, apparition de contraintes résiduelles dans les plaques ferromagnétiques et altération des propriétés magnétiques de ces plaques), ni par surmoulage d'élastomère (résistance à la fatigue insuffisante).

La présente invention a donc notamment pour but de résoudre les problèmes techniques susmentionnés.

A cet effet, selon l'invention, un actionneur électromagnétique du genre en question est caractérisé :
- en ce que les plaques ferromagnétiques présentent chacune des premier et deuxième bords opposés parallèles à l'axe central, les premiers bords des différentes plaques ferromagnétiques étant alignés entre eux selon un premier axe transversal perpendiculaire à l'axe central et les deuxièmes bords des plaques ferromagnétiques étant également alignés entre eux selon ledit premier axe transversal,
- en ce que les plaques ferromagnétiques sont solidarisées avec des première et deuxième barrettes transversales rigides qui sont assemblées par sertissage respectivement avec les premier et deuxième bords de chaque plaque ferromagnétique,
- et en ce que les corps en élastomère relient chaque barrette transversale à l'armature fixe.

Grâce à ces dispositions, on obtient un assemblage particulièrement rigide et résistant à la fatigue.

De plus, l'empilage des différentes plaques ferromagnétiques reste libre avant le sertissage, ce qui permet de positionner parfaitement ces plaques ferromagnétiques lors du sertissage, en garantissant une grande précision de l'assemblage.

Par ailleurs, le mode d'assemblage utilisé évite l'apparition de contraintes résiduelles et ne modifie en aucune façon les propriétés magnétiques des plaques ferromagnétiques, contrairement à l'assemblage par soudage.

Enfin, les plaques ferromagnétiques sont reliées à la barrette transversale au niveau des faces latérales de l'élément magnétique mobile, où le flux magnétique est quasiment nul, de sorte qu'on évite l'apparition de courants de Foucault.

Dans des modes de réalisation préférés de l'invention, on peut éventuellement avoir recours en outre à l'une et/ou à l'autre des dispositions suivantes :
- les barrettes transversales se présentent sous la forme de plaques s'étendant chacune parallèlement au premier axe transversal et à l'axe central ;
- les premier et deuxième bords de chaque plaque ferromagnétique comportent chacun deux doigts qui font saillie parallèlement à un deuxième axe transversal perpendiculaire à l'axe central et au premier axe transversal, ces deux doigts délimitant entre eux une échancrure dans laquelle est reçue la barrette transversale correspondante, et chacun de ces doigts étant serti sur ladite barrette transversale ;
- les barrettes transversales sont serties sur les plaques ferromagnétiques : on évite ainsi toute opération de pliage des plaques ferromagnétiques, de façon à perturber le moins possible leurs propriétés magnétiques ;
- chaque barrette transversale comporte une partie centrale qui s'étend selon le premier axe transversal entre deux extrémités divergentes s'étendant chacune en biais en s'éloignant de ladite partie centrale de la barrette transversale, et ladite barrette transversale étant reliée à l'armature fixe par l'intermédiaire de deux corps en élastomère adhérisés entre d'une part, chacune des extrémités divergentes de cette barrette transversale, et d'autre part, deux faces de support qui appartiennent à l'armature fixe et qui sont parallèles auxdites extrémités divergentes : l'élément magnétique mobile est ainsi maintenu sensiblement immobile perpendiculairement à l'axe central ;
- les corps en élastomère sont adhérisés chacun entre d'une part, une face extérieure appartenant à l'une des barrettes transversales et s'étendant parallèlement à l'axe central et au premier axe transversal, et d'autre part, une face de support appartenant à l'armature fixe et parallèle à ladite face extérieure de la barrette transversale correspondante ;
- au moins une des barrettes transversales se prolonge par une cosse de raccordement électrique, les barrettes transversales et les plaques ferromagnétiques étant électriquement conductrices et en contact électrique mutuel, et l'actionneur électromagnétique comportant par ailleurs au moins une plaque conductrice fixe qui est parallèle à l'élément magnétique mobile et qui forme avec celui-ci un capteur capacitif de position ;
- l'armature fixe comprend des première et deuxième entretoises rigides distinctes qui sont disposées respectivement le long des première et deuxième barrettes transversales en encadrant l'élément magnétique mobile ;
- l'ensemble de l'élément magnétique mobile est recouvert par un surmoulage d'élastomère qui inclut les corps en élastomère ;
- l'actionneur électromagnétique comporte deux électroaimants montés en opposition, de part et d'autre de l'élément magnétique mobile selon l'axe central.

D'autres caractéristiques et avantages de l'invention apparaîtront au cours de la description suivante de plusieurs de ses formes de réalisation, données à titre d'exemples non limitatifs, en regard des dessins joints.

Sur les dessins :
- la figure 1 est une vue schématique en perspective montrant un actionneur électromagnétique selon une première forme de réalisation de l'invention, l'élément magnétique mobile de cet actionneur n'étant pas représenté,
- la figure 2 est une vue en perspective de l'élément magnétique mobile destiné à équiper l'actionneur électromagnétique de la figure 1,
- la figure 3 est une vue en coupe transversale de l'élément magnétique mobile de la figure 2, avant sertissage des plaques ferromagnétiques sur les barrettes transversales,
- la figure 4 est une vue similaire à la figure 3, après sertissage des plaques ferromagnétiques,
- et les figures 5 et 6 sont des vues similaires à la figure 2, pour des deuxième et troisième formes de réalisation de l'invention.

Sur les différentes figures, les mêmes références désignent des éléments identiques ou similaires.

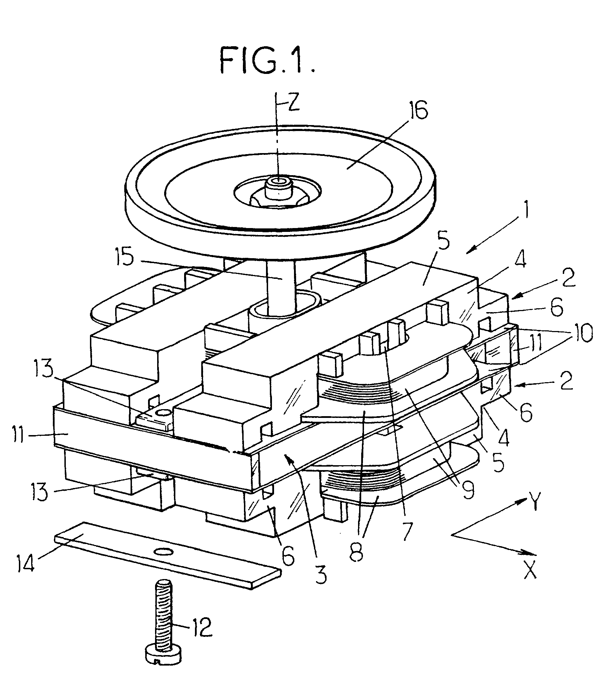

Comme représenté schématiquement sur la figure 1, l'invention concerne un actionneur électromagnétique qui est plus particulièrement destiné à équiper un support antivibratoire hydraulique de véhicule automobile, lequel support est interposé entre le moteur et la caisse du véhicule. Un exemple de tel support antivibratoire hydraulique est donné par exemple notamment dans le document EP-A-0 893 620.

L'actionneur électromagnétique 1 comporte deux électroaimants 2 montés en opposition et délimitant entre eux un espace libre 3 destiné à contenir un élément magnétique mobile 17 qui sera décrit ci-après et qui est déplacé par les électroaimants 2 en suivant des mouvements alternés rapides de translation selon un axe central Z.

Chacun des électroaimants 2 comprend :
- une carcasse fixe 4 en matériau magnétique feuilleté, qui, dans l'exemple considéré ici, présente sensiblement la forme d'un E, avec une âme centrale 5 perpendiculaire à l'axe Z, deux branches latérales 6 parallèles à l'axe Z et une branche centrale 7 également parallèle à l'axe Z,
- une structure 8 en matière plastique solidarisée avec la carcasse 4,
- et une bobine 9 enroulée autour de la branche centrale 7 de la carcasse 4 en matériau magnétique et portée par la structure 8 en matière plastique.

De préférence, les faces en regard des deux électroaimants sont équipées chacune d'une plaque fixe 10 perpendiculaire à l'axe Z, formant une électrode de capteur capacitif (par exemple, chaque plaque 10 peut être réalisée en matériau isolant et recouverte d'une couche de métallisation orientée vers l'espace libre 3).

De plus, les électroaimants 2 sont séparés l'un de l'autre par deux entretoises rigides 11, qui sont interposées entre les plaques 10 susmentionnées. Ces entretoises s'étendent longitudinalement selon un axe transversal X.

Les électroaimants 2 et les entretoises 11 sont assemblés par exemple au moyen de vis 12 fixées à un boîtier (non représenté) et traversant les entretoises 11 ainsi que des pattes 13 de la structure 8 en matière plastique, éventuellement avec interposition de plaques d'appui 14 sous les têtes des vis 12.

Par ailleurs, l'actionneur électromagnétique 1 comporte une tige axiale 15 qui est solidaire de l'élément magnétique mobile et qui s'étend parallèlement à l'axe Z jusqu'à un piston 16 similaire à celui décrit par exemple dans le document EP-A-0 893 620 susmentionné, ce piston servant à générer dans une chambre hydraulique du support antivibratoire mentionné ci-dessus, des contrevibrations qui permettent de neutraliser les vibrations du moteur.

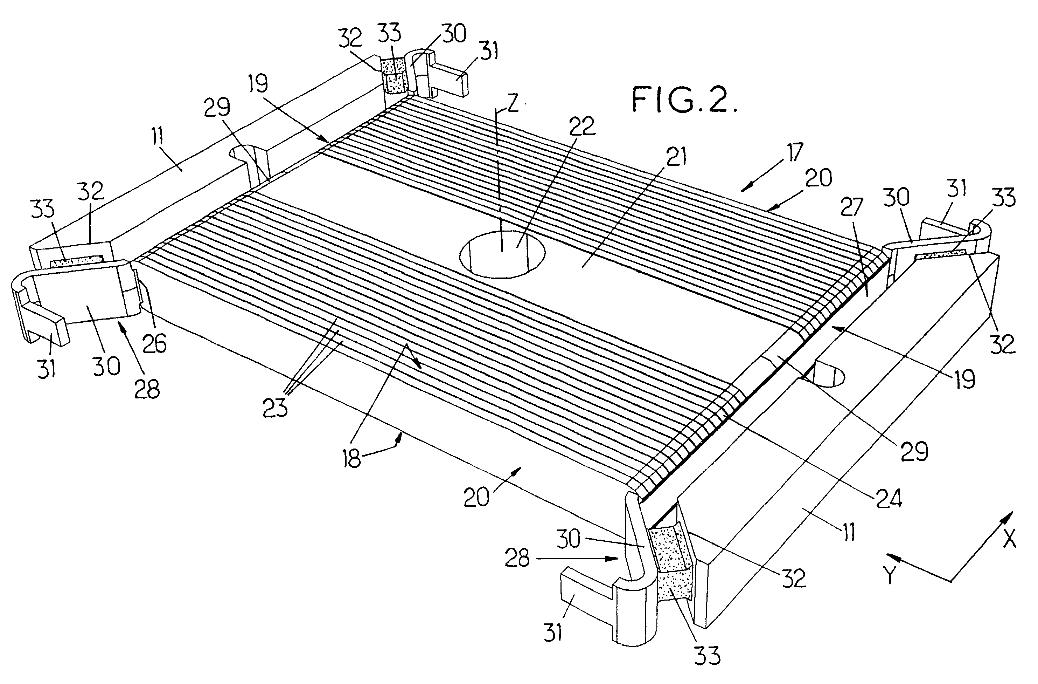

Comme représenté sur la figure 2, l'élément magnétique mobile 17, qui est reçu dans l'espace libre 3 décrit ci-dessus, présente la forme générale d'un parallélépipède comportant :
- deux faces principales 18 rectangulaires, perpendiculaires à l'axe Z, la diagonale de chaque face principale pouvant mesurer par exemple environ 70 mm, et les deux faces principales 18 étant séparées l'une de l'autre par une épaisseur de l'élément magnétique mobile 17 pouvant être par exemple de l'ordre de 5 mm,
- deux faces latérales 19 qui s'étendent parallèlement aux axes X et Z, respectivement le long des deux entretoises 11,
- et deux faces latérales 20 qui s'étendent parallèlement à l'axe Z et à un axe Y perpendiculaire aux axes Z et X susmentionnés.

Dans l'exemple représenté sur la figure 2, l'élément magnétique mobile 17 comporte un noyau métallique 21 plein qui est percé d'un alésage 22 dans lequel est fixée la tige 15 susmentionnée, ce noyau étant interposé entre deux empilages de plaques ferromagnétiques rigides 23 (réalisées par exemple en acier au silicium).

Chaque plaque ferromagnétique 23 présente une forme plane et s'étend dans le plan des axes Y et Z entre des premier et deuxième bords 24 parallèles à l'axe Z.

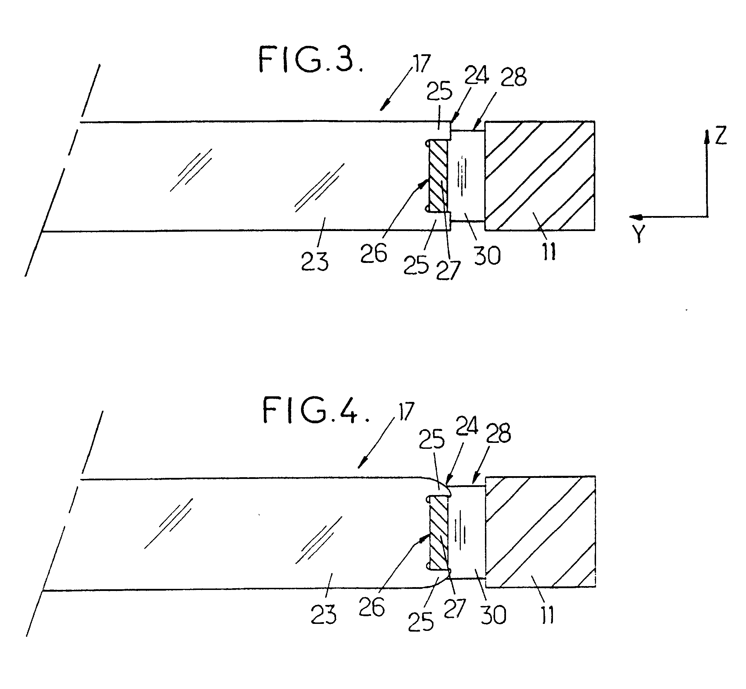

Comme représenté sur la figure 3, chaque bord 24 de chaque plaque ferromagnétique 23 s'étend parallèlement à l'axe Z entre deux extrémités qui forment chacune un doigt 25 faisant saillie vers l'extérieur parallèlement à l'axe Y, ces doigts 25 délimitant entre eux une échancrure 26.

Les échancrures 26 des différentes plaques ferromagnétiques 23 sont alignées parallèlement à l'axe X, de sorte que l'ensemble desdites échancrures forme une gorge adaptée pour recevoir la partie centrale plane 27 d'une barrette rigide 28, sur chacune des faces latérales 19 de l'élément magnétique mobile.

Lors de l'assemblage de l'élément magnétique mobile 17, les plaques ferromagnétiques 23 sont toutes indépendantes les unes des autres, et le noyau 21 est indépendant des plaques ferromagnétiques 23, de sorte que l'emboîtement de chaque barrette transversale 28 dans les échancrures correspondantes 26 permet de positionner parfaitement les plaques ferromagnétiques 23 et le noyau 21. Une fois ce positionnement effectué, les doigts 25 des plaques ferromagnétiques 23 sont sertis sur la barrette transversale 28 correspondante, de même que des pattes 29 formées aux extrémités opposées du noyau 21 en correspondance avec les doigts 25 des plaques 23.

Comme représenté sur la figure 2, chaque barrette transversale 28 se présente avantageusement sous la forme d'une languette de tôle dont la largeur s'étend parallèlement à l'axe Z et dont la longueur s'étend parallèlement à l'axe X, la partie centrale 27 de chaque barrette transversale 28 se prolongeant avantageusement vers l'extérieur par deux extrémités pliées 30 divergentes qui s'étendent chacune en biais, sensiblement à 45°, en s'éloignant de ladite partie centrale 27 et en s'éloignant des plaques ferromagnétiques 23.

Chacune de ces extrémités pliées 30, ou tout au moins l'une des extrémités 30 d'une des barrettes 28, se prolonge par une cosse 31 de connexion électrique destinée à être raccordée à un dispositif de mesure également connecté aux électrodes 10 susmentionnées, l'élément magnétique mobile 17 formant le capteur capacitif avec ces électrodes.

Par ailleurs, l'entretoise 11 présente à ses extrémités des faces d'appui 32 qui sont disposées en regard des extrémités pliées 30 de chaque barrette 28 et qui s'étendent parallèlement auxdites extrémités pliées, un plot en élastomère 33 étant moulé et adhérisé (de préférence avant sertissage des barrettes transversales 28) entre chaque extrémité repliée 30 et chaque face d'appui correspondante 32.

Cette disposition des plots en élastomère 33 permet de conserver un excellent centrage de l'élément magnétique mobile 17 dans le plan perpendiculaire à l'axe Z, tout en rendant possible les mouvements de l'élément magnétique mobile 17 parallèlement à l'axe Z.

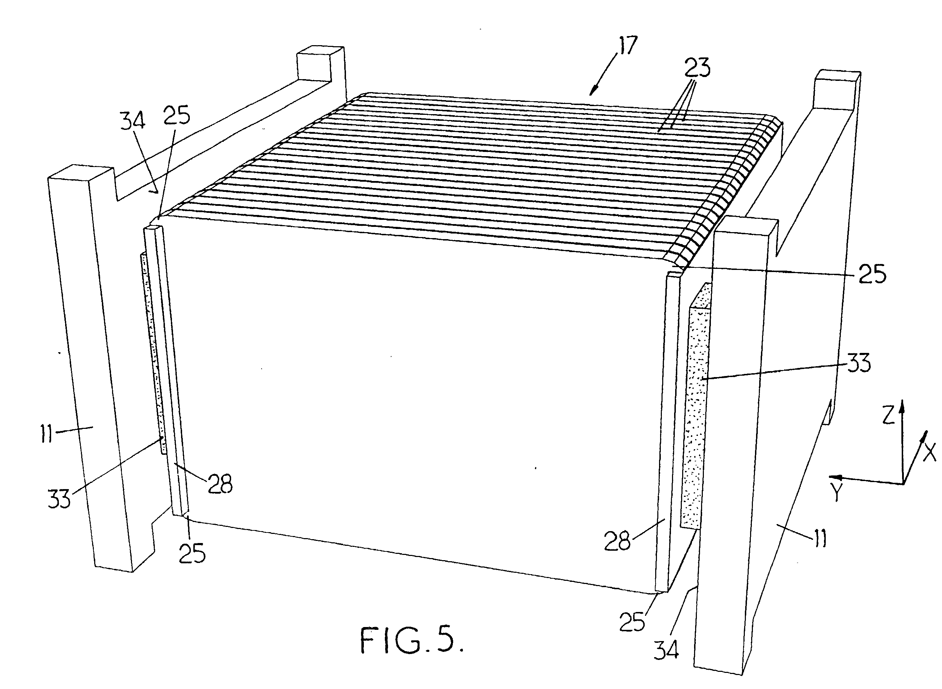

Le mode de réalisation de l'invention qui est représenté sur la figure 5 est similaire à celui décrit précédemment, de sorte qu'il ne sera pas décrit à nouveau en détail. Ce mode de réalisation de la figure 5 se distingue de celui des figures 1 à 4 par les points suivants :
- l'élément magnétique mobile 17 présente une épaisseur plus grande que précédemment parallèlement à l'axe Z (l'espace libre 3 de l'actionneur électromagnétique étant dimensionné de façon à accueillir cet élément magnétique mobile 17), de façon à présenter une masse plus importante : l'élément magnétique 17 sert alors de "batteur" en générant par son seul mouvement les contrevibrations visant à annuler les vibrations du moteur, et ce sans utiliser de tige 15 et de piston 16,
- les barrettes transversales 28 sont entièrement planes et comprises dans le plan des axes X et Z,
- et les barrettes 28 sont reliées aux entretoises 11 par des plots en élastomère 33 qui sont adhérisés sur la face externe de chaque barrette transversale 28 et sur la face interne 34, parallèle aux axes X et Z, de l'entretoise 11 correspondante,
- et l'élément magnétique mobile 17 ne comporte pas le noyau central 21 décrit précédemment.

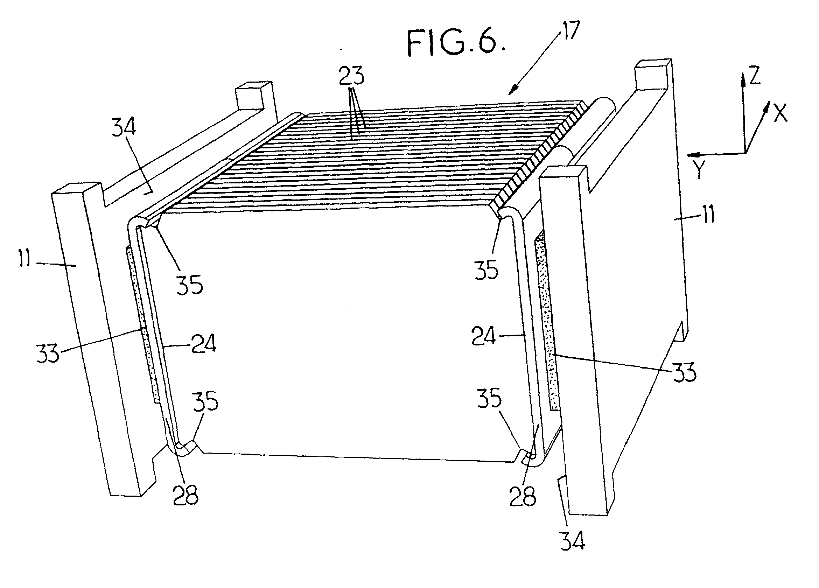

Enfin, le mode de réalisation de la figure 6 est similaire à celui de la figure 5, à ceci près que ce sont les extrémités de chaque barrette transversale 28 qui sont serties sur des encoches 35 formées aux deux extrémités de chaque bord 24 de chaque plaque ferromagnétique 23, ces encoches étant ouvertes selon l'axe Z.

Bien entendu, ce dernier mode de sertissage serait utilisable également dans la forme de réalisation des figures 1 à 4.

Dans les différents modes de réalisation envisagés, la totalité ou la quasi-totalité de l'élément magnétique mobile 17 pourrait être recouverte par un surmoulage d'élastomère comprenant les plots 33, après fixation des barrettes transversales 28 par sertissage.

## Revendications

1. Actionneur électromagnétique (1) comportant :
- un élément magnétique mobile (17) qui est déplaçable en translation en suivant des mouvements alternatifs selon un axe central (Z), cet élément magnétique mobile (17) comprenant des plaques ferromagnétiques rigides (23) empilées, et ledit élément magnétique mobile (17) étant relié à une armature fixe par des corps en élastomère (33) qui autorisent les mouvements alternatifs de l'élément magnétique mobile (17) parallèlement à l'axe central (Z),
- et au moins un électroaimant (2) qui est solidaire de ladite armature et qui est disposé pour commander les déplacements alternatifs de l'élément magnétique mobile (17) selon l'axe central (Z) lorsque ledit électroaimant (2) est parcouru par un courant variable au cours du temps,
**caractérisé en ce que** les plaques ferromagnétiques (23) présentent chacune des premier et deuxième bords opposés (24) parallèles à l'axe central (Z), les premiers bords (24) des différentes plaques ferromagnétiques (23) étant alignés entre eux selon un premier axe transversal (X) perpendiculaire à l'axe central (Z) et les deuxièmes bords (24) des plaques ferromagnétiques (23) étant également alignés entre eux selon ledit premier axe transversal (X),
**en ce que** les plaques ferromagnétiques (23) sont solidarisées par sertissage respectivement avec des première et deuxième barrettes transversales rigides (28) qui sont assemblées par sertissage respectivement avec les premier et deuxième bords (24) de chaque plaque ferromagnétique (23),
et **en ce que** les corps en élastomère (33) relient chaque barrette transversale (28) à l'armature fixe.

2. Actionneur électromagnétique selon la revendication 1, dans lequel les barrettes transversales se présentent sous la forme de plaques s'étendant chacune parallèlement au premier axe transversal (X) et à l'axe central (Z).

3. Actionneur électromagnétique selon la revendication 1 ou la revendication 2, dans lequel les premier et deuxième bords (24) de chaque plaque ferromagnétique (23) comportent chacun deux doigts (25) qui font saillie parallèlement à un deuxième axe transversal (Y) perpendiculaire à l'axe central (Z) et au premier axe transversal (X), ces deux doigts (25) délimitant entre eux une échancrure (26) dans laquelle est reçue la barrette transversale (28) correspondante, et chacun de ces doigts (25) étant serti sur ladite barrette transversale (28).

4. Actionneur électromagnétique selon la revendication 1 ou la revendication 2, dans lequel les barrettes transversales (28) sont serties sur les plaques ferromagnétiques (23).

5. Actionneur électromagnétique selon l'une quelconque des revendications précédentes, dans lequel chaque barrette transversale (28) comporte une partie centrale (27) qui s'étend selon le premier axe transversal (X) entre deux extrémités divergentes (30) s'étendant chacune en biais en s'éloignant de ladite partie centrale (27) de la barrette transversale (28), et ladite barrette transversale (28) étant reliée à l'armature fixe par l'intermédiaire de deux corps en élastomère (33) adhérisés entre d'une part, chacune des extrémités divergentes (30) de cette barrette transversale (28), et d'autre part, deux faces de support (32) qui appartiennent à l'armature fixe et qui sont parallèles auxdites extrémités divergentes (30).

6. Actionneur électromagnétique selon l'une quelconque des revendications 1 à 4, dans lequel les corps en élastomère (33) sont adhérisés chacun entre d'une part, une face extérieure appartenant à l'une des barrettes transversales (28) et s'étendant parallèlement à l'axe central (Z) et au premier axe transversal (X), et d'autre part, une face de support (32) appartenant à l'armature fixe et parallèle à ladite face externe de la barrette transversale correspondante (28).

7. Actionneur électromagnétique selon l'une quelconque des revendications précédentes, dans lequel au moins une des barrettes transversales (28) se prolonge par une cosse (31) de raccordement électrique, les barrettes transversales (28) et les plaques ferromagnétiques (23) étant électriquement conductrices et en contact électrique mutuel, et l'actionneur électromagnétique comportant par ailleurs au moins une plaque conductrice (10) fixe qui est parallèle à l'élément magnétique mobile (17) et qui forme avec celui-ci un capteur capacitif de position.

8. Actionneur électromagnétique selon l'une quelconque des revendications précédentes, dans lequel l'armature fixe comprend des première et deuxième entretoises rigides (11) distinctes qui sont disposées respectivement le long des première et deuxième barrettes transversales (28) en encadrant l'élément magnétique mobile (17) .

9. Actionneur électromagnétique selon l'une quelconque des revendications précédentes, dans lequel l'ensemble de l'élément magnétique mobile (17) est recouvert par un surmoulage d'élastomère, qui inclut les corps en élastomère (33).

10. Actionneur électromagnétique selon l'une quelconque des revendications précédentes, dans lequel l'actionneur électromagnétique comporte deux électroaimants (2) montés en opposition, de part et d'autre de l'élément magnétique mobile (17) selon l'axe central (C).

## Patentansprüche

1. Elektromagnetisches Stellglied (1) mit:
- einem beweglichen magnetischen Element (17), das translatorisch entlang einer Mittelachse (Z) hin und her beweglich ist, wobei dieses bewegliche magnetische Element (17) ferromagnetische starre gestapelte Platten (23) aufweist und mit einer festen Armatur über Elastomerkörper (33) verbunden ist, die die Hin- und Herbewegungen des beweglichen magnetischen Elements (17) parallel zur Mittelachse (Z) ermöglichen, und
- zumindest einem Elektromagneten (2), der mit der Armatur verbunden ist und so angeordnet ist, dass er die Hin- und Herbewegungen des beweglichen magnetischen Elements (17) entlang der Mittelachse (Z) ansteuert, wenn der Elektromagnet (2) von einem Wechselstrom durchflossen wird,
**dadurch gekennzeichnet, dass** die ferromagnetischen Platten (23) jeweils erste und zweite gegenüberliegende Kanten (24) haben, die parallel zur Mittelachse (Z) verlaufen, wobei die ersten Kanten (24) der einzelnen ferromagnetischen Platten (23) untereinander entlang einer ersten Querachse (X) ausgerichtet sind, die rechtwinklig zur Mittelachse (Z) verläuft, und die zweiten Kanten (24) der ferromagnetischen Platten (23) ebenfalls untereinander gemäß dieser ersten Querachse (X) ausgerichtet sind,
dass die ferromagnetischen Platten (23) durch Quetschverbinden mit ersten bzw. zweiten starren Querstegen (28) verbunden sind, die durch Quetschverbinden mit ersten bzw. zweiten Kanten (24) jeder ferromagnetischen Platte (23) zusammengefügt sind,
und dass die Elastomerkörper (33) jeden Quersteg (28) mit der festen Armatur verbinden.

2. Elektromagnetisches Stellglied (1) nach Anspruch 1, wobei die Querstege die Form von Platten haben, die sich jeweils parallel zur ersten Querachse (X) und zur Mittelachse (Z) erstrecken.

3. Elektromagnetisches Stellglied (1) nach Anspruch 1 oder 2, wobei die erste und die zweite Kante (24) jeder ferromagnetischen Platte (23) jeweils zwei Finger (25) aufweisen, die parallel zu einer zweiten Querachse (Y) hervorstehen, die senkrecht zur Mittelachse (Z) und zur ersten Querachse (X) verläuft, wobei diese Finger (25) untereinander eine halbmondförmige Ausnehmung (26) begrenzen, in welcher der entsprechende Quersteg (28) aufgenommen ist, und wobei jeder der Finger (25) auf den Quersteg (28) gefalzt oder gequetscht ist.

4. Elektromagnetisches Stellglied (1) nach Anspruch 1 oder 2, wobei die Querstege (28) auf die ferromagnetischen Platten (23) aufgefalzt oder gequetscht sind.

5. Elektromagnetisches Stellglied (1) nach einem der vorangehenden Ansprüche, wobei jeder Quersteg (28) einen mittleren Teil (27) hat, der sich entlang der ersten Querachse (X) zwischen zwei divergierenden Enden (30) erstreckt, die sich jeweils schräg vom mittleren Bereich (27) des Querstegs (28) entfernen, und wobei der Quersteg (28) mit der festen Armatur über zwei Elastomerkörper (33) verbunden ist, die zwischen einerseits jedem der divergierenden Enden (30) dieses Querstegs (28) und andererseits zwei Stützflächen (32) anhaften, die zu der festen Armatur gehören und sich parallel zu den divergierenden Enden (30) erstrecken.

6. Elektromagnetisches Stellglied (1) nach einem der Ansprüche 1 bis 4, wobei die Elastomerkörper (33) jeweils zwischen einerseits einer äußeren Fläche, die zu einem der Querstege (28) gehört und sich parallel zur zentralen Achse (Z) und zur ersten Querachse (X) erstreckt, und andererseits einer Stützfläche (32) anhaften, die zu der festen Armatur gehört und parallel zur äußeren Fläche des zugehörigen Querstegs (28) verläuft.

7. Elektromagnetisches Stellglied (1) nach einem der vorangehenden Ansprüche, wobei zumindest einer der Querstege (28) sich über einen elektrischen Anschlussschuh (31) verlängert, wobei die Querstege (28) und die ferromagnetischen Platten (23) elektrisch leitend sind und in wechselseitigem elektrischen Kontakt stehen, und wobei das elektromagnetische Stellglied außerdem zumindest eine feste Leiterplatte (10) aufweist, die parallel zu dem beweglichen magnetischen Element (17) ist und mit diesem einen kapazitiven Positionssensor bildet.

8. Elektromagnetisches Stellglied (1) nach einem der vorangehenden Ansprüche, wobei die feste Armatur ein erstes und ein zweites voneinander beabstandetes Abstandsstück (11) aufweist, die entlang der ersten und zweiten Querstege (28) angeordnet sind und dabei das bewegliche magnetische Element (17) umgeben.

9. Elektromagnetisches Stellglied (1) nach einem der vorangehenden Ansprüche, wobei die Gesamtheit des beweglichen magnetischen Elements (17) von einem elastomerischen Formstück bedeckt ist, das die Elastomerkörper (33) beinhaltet.

10. Elektromagnetisches Stellglied (1) nach einem der vorangehenden Ansprüche, wobei das elektromagnetische Stellglied zwei Elektromagnete (2) aufweist, die einander gegenüberliegend auf jeweils einer Seite des beweglichen magnetischen Elements (17) entlang der Mittelachse (C) angebracht sind.

## Claims

1. An electromagnetic actuator (1) including:
- a mobile magnetic member (17) which can reciprocate in translation along a central axis (Z), said mobile magnetic member (17) including stacked rigid ferromagnetic plates (23) and said mobile magnetic member (17) being joined to a fixed yoke by elastomer bodies (33) which allow the mobile magnetic member (17) to reciprocate parallel to the central axis (Z), and
- at least one electromagnet (2) which is fastened to said yoke and which is adapted to reciprocate the mobile magnetic member (17) along the central axis (Z) when a current that varies with time flows through said electromagnet (2), **characterised in that**:
each ferromagnetic plate (23) has first and second opposite ends (24) parallel to the central axis (Z), the first edges (24) of the ferromagnetic plates (23) are aligned with each other along a first transverse axis (X) perpendicular to the central axis (Z) and the second edges (24) of the ferromagnetic plates (23) are also aligned with each along said first transverse axis (X),
the ferromagnetic plates (23) are crimped to respective first and second rigid transverse strips (28) which are respectively crimped to the first and second edges (24) of each ferromagnetic plate (23), and
the elastomer bodies (33) join each transverse strip (28) to the fixed yoke.

2. An electromagnetic actuator according to claim 1 wherein the transverse strips are plates each of which is parallel to the first transverse axis (X) and to the central axis (Z).

3. An electromagnetic actuator according to claim 1 or claim 2 wherein the first and second edges (24) of each ferromagnetic plate (23) each include two fingers (24) which project parallel to a second transverse axis (Y) perpendicular to the central axis (Z) and to the first transverse axis (X), a notch (26) is defined between the two fingers (25) and receives the corresponding transverse strip (28) and each finger (25) is crimped to said transverse strip (28).

4. An electromagnetic actuator according to claim 1 or claim 2 wherein the transverse strips (28) are crimped to the ferromagnetic plates (23).

5. An electromagnetic actuator according to any preceding claim wherein each transverse strip (28) has a central part (27) which extends along the first transverse axis (X) between two diverging oblique ends (30) each of which diverges from said central part (27) of the transverse strip (28) and said transverse strip (28) is joined to the fixed yoke by two elastomer bodies (33) stuck between each divergent end (30) of the transverse strip (28) and two support faces (32) of the fixed yoke which are parallel to said divergent ends (30).

6. An electromagnetic actuator according to any of claims 1 to 4 wherein the elastomer bodies (33) are each stuck between an outside face of one transverse strip (28) parallel to the central axis (Z) and to the first transverse axis (X) and a support face (32) of the fixed yoke parallel to said external face of the corresponding transverse strip (28).

7. An electromagnetic actuator according to any preceding claim wherein at least one transverse strip (28) is extended by an electrical connection terminal (31), the transverse strips (28) and the ferromagnetic plates (23) are electrically conductive and in electrical contact with each other and the electromagnetic actuator further includes at least one fixed conductive plate (10) parallel to the mobile magnetic member (17) and forming with it a capacitive position sensor.

8. An electromagnetic actuator according to any preceding claim wherein the fixed yoke includes separate first and second rigid spacers (11) respectively disposed along the first and second transverse strips (28) with the mobile magnetic member (17) between them.

9. An electromagnetic actuator according to any preceding claim wherein the entire mobile magnetic member (17) is covered with a moulded elastomer material which incorporates the elastomer bodies (33).

10. An electromagnetic actuator according to any preceding claim including two opposed electromagnets (2) on respective opposite sides of the mobile magnetic member (17) relative to the central axis (Z).
